# EUROPEAN PATENT SPECIFICATION

(11) **EP 4 163 528 B1**
(45) Date of publication and mention of the grant of the patent: **08.01.2025**
(21) Application number: 22167238.9
(22) Date of filing: 07.04.2022
(51) Int. Cl.: F16L 13/14

(54) **FITTING ASSEMBLY FOR PIPE CONNECTION**
ARMATURENEINHEIT FÜR EINE ROHRVERBINDUNG
ENSEMBLE DE FIXATION DE RACCORD DE TUYAU

(30) Priority: 07.10.2021 ES 202131989 U
(43) Date of publication of application: 12.04.2023
(73) Proprietor: AIS RDI, S.L.U., 45950 Casarrubios del Monte (ES)
(72) Inventor: MÉNDEZ ESCRIBANO, Eduardo, 45950 CASARRUBIOS DEL MONTE (ES); ALONSO HERMIRA, Laura, 45950 CASARRUBIOS DEL MONTE (ES); GUTIÉRREZ PÉREZ, Carlos Alberto, 45950 CASARRUBIOS DEL MONTE (ES)
(74) Representative: ZBM Patents - Zea, Barlocci & Markvardsen

(56) References cited:
- WO-A1-2014/032911
- ES-U- 1 266 800
- US-A1- 2021 254 762

## Description

### Technical field

The present application claims the benefit of priority of the Spanish Utility Model application U202131989 filed on 07-10-2021.

The present invention relates to pipe connection, in particular, to the connection of tubes, such as plastic pipes or pipes made of plastic and metal, for the flow of fluids. More specifically, the present description relates to a fitting assembly for pipe connection.

### Background

Fittings for connecting pipes such as plastic pipes especially of the multilayer type used, for example, in plumbing installations consisting of two polyethylene layers between which a layer of metal, plastic, etc. is arranged, joined together by an adhesive layer are widely known.

Joining of said type of conduits is usually carried out by means of a fitting that comprises a sleeve with a bushing intended to be pressed radially onto the conduit, tube, or pipe using a suitable jaw. In such known fittings, sealing elements, such as O-rings, fitted around the sleeve, are used to prevent fluid leakage.

Such pipe connection technique by pressing a bushing is known as press fitting. In order to carry out joining, suitable radial pressure is applied through a jaw on the bushing of the fitting causing the bushing to deform. The deformation of the bushing results in a deformation of the pipe, with a portion of the pipe material being inserted into the sleeve, applying pressure on the sealing elements. As a result, by virtue of the aforementioned sealing elements, a mechanically tight pipe connection is obtained in a rapid manner as compared to other types of pipe connections such as, for example, welded connections.

As described above, pipe fittings known in the art make use of sealing elements, such as O-rings, which are provided around the sleeve, inserted in one or more annular grooves formed therein, as disclosed, for example, in WO2019201500A1 and WO2014012757A1.

The problem with these fittings is that, when the pipe is inserted into the fitting, the O-rings may become damaged and even at least partially removed out of the annular groove of the sleeve where they are received. This may result in leaks that may not be detected in an installation pressure test, which is undesirable.

Several approaches to the above problem have been proposed in the art, such as the one disclosed in ES2224904 where a configuration is provided in which the O-ring does not protrude over the flank of the sleeve annular groove. However, provision of O-rings is still conducive to the occurrence of leakage at the pipe connection when the fitting is assembled.

ES1266800U discloses a fitting assembly for connecting tubes that comprises a sleeve with at least one circumferential groove configured to house a sealing gasket. Flanks of different diameter adjacent the circumferential groove are defined in the sleeve. The sleeve is adapted to receive a bushing intended to be radially pressed to compress one end of a tube against the sleeve.

Therefore, there still remains the need for a fitting for pipe connection, in particular a fitting for joining plastic and metal multilayer pipes, having a simple configuration and which ensures tightness of the assembly once the joint has been made.

### Summary

A pipe connection fitting assembly is described hereinbelow, which has been found to effectively overcome the above-mentioned problem and that further provides a number of additional advantages, in particular, for joining multilayer pipes (e.g., consisting only of plastic layers, or consisting of plastic layers and metal layers) and/or monolayer pipes (e.g., consisting of cross-linked polyethylene) for conducting domestic hot and cold water, heating applications, and many others, as will be shown hereinafter.

In the present disclosure, the terms tube and pipe will be used interchangeably to designate conduits or parts of conduits conducting fluids that can be connected to each other.

The pipe connection fitting assembly disclosed herein comprises a sleeve having at least one outer profile of a given length. Said at least one sleeve outer profile extends from a first end of the sleeve to a second end or free end of the sleeve, opposite said first end. As used herein, the second end or free end of the sleeve refers to an end or terminal portion of the sleeve which, when the sleeve is inserted into the bushing when assembling the fitting, is the one which first passes through the inside of the bushing.

The sleeve outer profile includes an outer surface where at least two toothed areas are formed. More specifically, the sleeve outer profile includes at least one first toothed area having at least two teeth, such as, for example, three or more teeth, and at least one second toothed area having at least one tooth, such as, for example, two or more teeth.

The sleeve outer profile further includes a curved area. In particular, the curved area is concave, that is, it has a curvature towards the inside of the assembly, towards the longitudinal axis of the sleeve, i.e., it is a depth wise recessed area. The height of such curved area is lower than the height of the teeth of the first and second toothed area. Said curved area is formed between the first toothed area and the second toothed area in a substantially central position of the sleeve outer profile. The two toothed areas of the present fitting assembly are thus spaced away by said curved area. The curved area may have protrusions formed at the ends thereof. The height of said protrusions in the curved area may be lower than or equal to the height of the teeth.

The present fitting assembly for pipe connection further comprises a bushing. The bushing is intended to be mounted around said sleeve and on a coupling part intended to hold the bushing on the sleeve. The above-mentioned first end of the sleeve outer profile is located closer to said coupling part than the second end or free end of the sleeve outer profile, while the above mentioned second end or free end of the sleeve outer profile is located furthest from the coupling part than the first end of the sleeve outer profile.

The sleeve outer profile, as described above, thus defines areas where the positioning of the bushing and coupling thereof by means of the bushing coupling part is to be performed. In the mounting position, a gap is defined between the bushing and the sleeve profile, suitable for a tube to be inserted there through.

As described above, the sleeve has one or more outer profiles, which may be curved or straight. If the sleeve is made up of several outer profiles, the outer profiles may be the same or different from each other, and they may be arranged in different ways. For example, the outer profiles may be aligned with each other, they may be arranged at an angle to each other, such as 90°, forming an elbow shape, a T-shape, or other angles. The sleeve outer profile(s) may include threaded areas.

The teeth of the first toothed area and the teeth of the second toothed area of the sleeve outer profile have rounded ridges. The ridges of the teeth of the first toothed area have a radius of curvature of 0.3 mm. It is preferred that the ridges of the teeth in the second toothed area have a radius of curvature of 0.2 mm.

Each tooth formed in the toothed areas has two flanks. One flank, which is located furthest from the free end of the sleeve, defines an angle with the outer surface of the sleeve outer profile which has a value other than 90°. That is, a flank is formed in each tooth furthest from the free end of the sleeve having an inclination with respect to the outer surface of the sleeve outer profile, i.e., it is not perpendicular. Examples of values of such angle between the flank furthest from the free end of the sleeve and the outer surface of the sleeve outer profile are between 45° and 80°, more specifically a value between 60° and 70°. The other flank defining the tooth, i.e., the one located closer to the free end of the sleeve, defines an angle with the outer surface of the sleeve outer profile which also has a value other than 90°.

In operation, that is, in an assembly position, the tube is arranged sandwiched between the bushing and the sleeve, so that the tube is in close contact with the sleeve and the bushing, as the bushing is pressed against the sleeve through a suitable jaw, by applying a proper radial pressure thereon.

Between the flanks of each tooth, i.e., their lateral surfaces, an angle may be defined which preferably has a value other than 90°. In particular, it is preferred that the angle defined between the flanks in each tooth has a value between 55° and 80°, specifically a value between 60° and 70°.

The curved area formed between the two toothed areas is positioned so that the center thereof is at a distance from a free end of the sleeve. Said distance is preferably 45-65% of the length of the sleeve outer profile.

The first toothed area may extend along a first length and the second toothed area may extend along a second length preferably shorter than or equal to the first length. That is, the first toothed area has an extension greater than or equal to the extension of the second toothed area.

Between contiguous tooth ridges of the first toothed area a distance is defined which preferably corresponds to 33-36% of the above mentioned first length. Between contiguous tooth ridges of the second toothed area a distance is defined which preferably is equal to or shorter than said distance between contiguous tooth ridges of the first toothed area.

A support area may be provided on the sleeve outer profile. Said support area is configured to receive the aforementioned coupling part for holding the bushing and positioning a jaw to properly press the bushing onto the pipe against the sleeve.

With a fitting assembly having the specific geometry of the sleeve outer profile as described above, consisting of two toothed areas separated by a curved area with protrusions, it has been found that an advantageous optimization of the contact pressure between the pipe and the sleeve profile, with values of the order of 200 to 350 MPa, is obtained, which makes it possible to hold the pipe to the fitting assembly, once the latter has been pressed tightly together without the need for either O-rings or any other sealing element. The design of toothed areas with rounded ridged teeth provides excellent contact pressure performance as compared to conventional tooth designs with flat or ridged areas. The described fitting assembly makes it possible to avoid the use of sealing elements and the provision of radial contact pressure between the pipe material, usually a multilayer pipe, the sleeve, and the bushing such that no fluid leakage occurs.

As stated above, the described fitting assembly advantageously eliminates the need for sealing elements, such as ethylene propylene diene monomer (EPDM) O-rings, nitrile butadiene rubber (NBR), etc., which are employed in most commercially available fittings. The lack of sealing elements results in simplifying assembly, reducing costs, and maintaining effectiveness. The described fitting assembly also reduces the risk of seal winding up during assembly, thus advantageously avoiding subsequent leaks.

This results in a very efficient pipe fitting assembly by press fitting, which overcomes currently existing problems in prior art fittings, avoiding the use of sealing elements, providing high performance in joining of multilayer plastic-metal pipes, ensuring tightness throughout the service life of the fitting and the installation.

The described fitting assembly is compact, light, safe, and cost effective due to the simplification of parts, in particular the absence of sealing elements. In addition, the fitting assembly allows LBP (Leak Before Press) function to be carried out, which makes it possible to easily detect leaks due to lack of pressing when pressure testing the installation, even at very low fluid pressures, of the order of 0-6 bar. This advantageously makes it possible to easily identify unpressed fittings before starting up the installation.

The described fitting assembly further allows a great ease of pressing through manual tools, such as radial pressing machines with conventional jaws.

A further important advantage from the particular specific geometry of the above described sleeve outer profile is that the assembly is watertight, especially when used for joining multilayer pipes such as, for example, pipes consisting of two layers of plastic material and one layer of aluminium. The layers of plastic material in such multilayer pipes may be made of polyethylene of raised temperature resistance (PERT) or cross-linked polyethylene (PEX), interchangeably.

Additional advantages and features of the fitting assembly for pipe connection will become apparent to those skilled in the art upon examination of the description or may be learned by practice thereof.

### Brief description of the drawings

Particular embodiments of a fitting assembly for pipe connection will be described in the following with reference to the appended drawings, in which:
Figure 1 is a sectional view of one example of the present fitting assembly for pipe connection;
Figure 1a is a diagrammatic front elevation view of one example of a portion of a jaw to be used in the fitting assembly of figure 1;
Figure 1b is a longitudinal section view of the jaw shown in figure 1a;
Figure 2 is a fragmentary sectional view of the sleeve of the fitting assembly in figure 1 showing relevant parameters of the geometry of the outer profile thereof;
Figure 2a is an enlarged partial view showing in detail a part S of figure 2;
Figure 2b is an enlarged partial view of part S in figure 2a showing angles defining the geometry of the sleeve teeth of the fitting assembly of figure 1;
Figure 3 is a perspective view of one example of a bushing of the present fitting assembly;
Figure 4 is a perspective view of one example of a coupling part of the bushing of the present fitting assembly;
Figure 5 is a perspective view of one example of a sleeve formed by a single straight profile;
Figure 6 is a perspective view of one example of a sleeve formed by two aligned straight profiles;
Figure 7 is a perspective view of one example of a sleeve formed by a single straight profile and a threaded profile;
Figure 8 is a perspective view of one example of a sleeve formed by two straight profiles forming an angle of 90° there between defining an elbow configuration; and
Figure 9 is a perspective view of one example of a sleeve formed by three straight profiles, two of them arranged aligned and forming an angle of 90° with each other defining a T-shaped configuration.

### Detailed description of embodiments

The non-limiting examples described below correspond to a fitting assembly 100 for connecting conduits. The conduits to be joined may be multilayer pipes or tubes 50 made of plastic, or plastic and metal, for conducting of fluids in plumbing, heating, etc. The multilayer pipes 50 to which the present fitting assembly 100 is intended may be, for example, cross-linked polyethylene and metal pipes for conducting of domestic hot and cold water, as well as for heating applications.

The fitting assembly 100 described herein comprises a sleeve 110 which may be made, for example, of brass and/or polyphenylsulfone (PPSU).

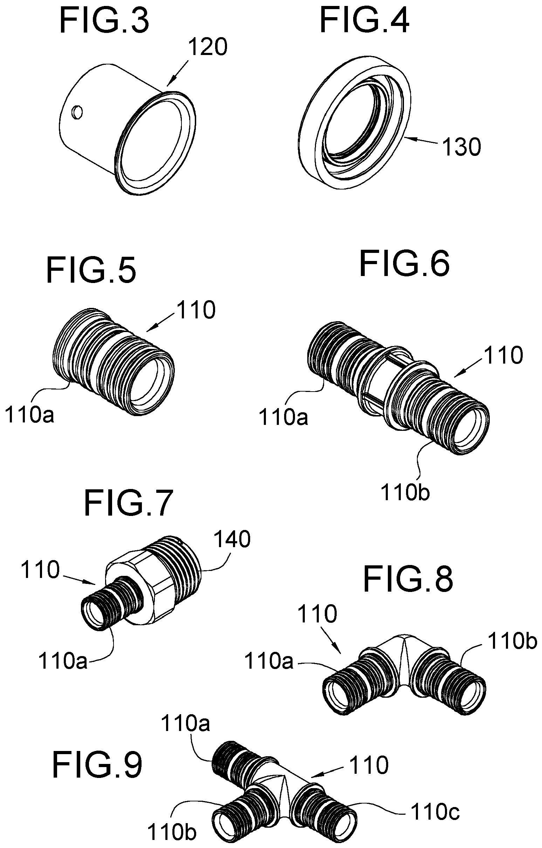

The sleeve 110 has one or more outer profiles 110a, 110b, 110c as shown in figures 5 to 9 of the drawings. As it will be described in greater detail further below, figures 5 and 7 show examples where the sleeve 110 is provided with a single outer profile 110a, figures 6 and 8 show examples where the sleeve 110 is provided with two outer profiles 110a, 110b, and figure 9 shows one example where the sleeve 110 is provided with three outer profiles 110a, 110b, 110c.

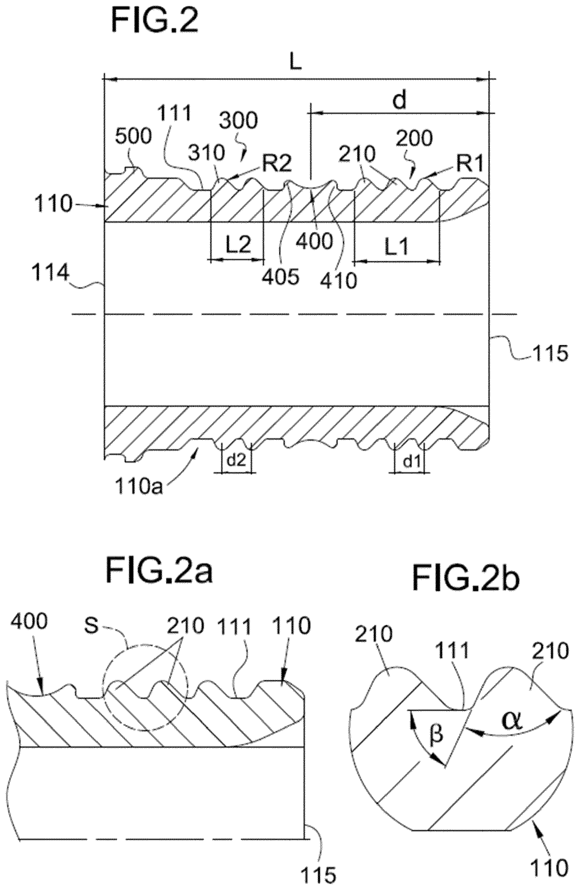

Each outer profile 110a, 110b, 110c of the sleeve 110 has a given length L, shown in figure 2. Each outer profile 110a, 110b, 110c of the sleeve 110 extends from a first end 114 of the sleeve 110 to a free end 115 of the sleeve 110 opposite said first end 114.

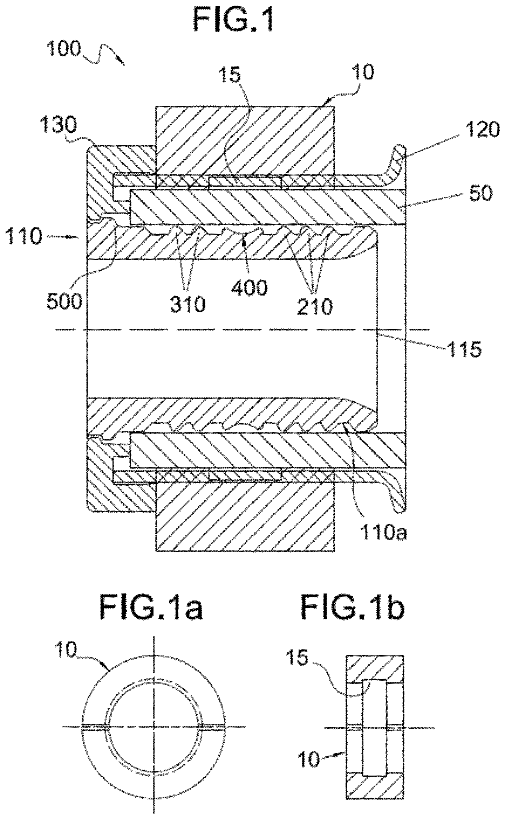

A first toothed area 200 and a second toothed area 300 are formed on the outer surface 111 of each outer profile 110a, 110b, 110c of the sleeve 110. A central curved area 400 is formed between the first toothed area 200 and the second toothed area 300 of each outer profile 110a, 110b, 110c of the sleeve 110. As it can be seen from figures 1 and 2 of the drawings, the central curved area 400 has a concave curvature formed towards the inside of the sleeve 110.

The curved central area 400 has protrusions 405, 410 formed at the ends thereof that promote the sealing of the fitting assembly 100. It has been shown experimentally that, at least in one of said protrusions 405, 410 of the curved central area 400, maximum contact pressure is obtained between the sleeve 110 and the pipe 50. The curved central area 400 coincides with a central area 15 of a jaw 10, one example of which is shown in detail in figures 1, 1a, and 1b of the drawings. The jaw 10 is configured to radially press the bushing 120 against the sleeve 110, with the pipe 50 sandwiched there between, as shown in figure 1. During the pressing operation, material from the pipe 50 flows into the central curved area 400 and into the toothed areas 200, 300 of the sleeve 110 and adheres to the protrusions 405, 410 thereof. The curved central area 400 allows the material to flow better when pressed by the jaw 10.

In the non-limiting example illustrated in figures 1 and 2 of the drawings, the first toothed area 200 of the outer profile 110a, 110b, 110c of the sleeve 110 has three teeth 210 and the second toothed area 300 of the outer profile 110a, 110b, 110c of the sleeve 110 has two teeth 310. Other configurations are possible provided that the first toothed area 200 has at least two teeth 210 and the second toothed area 300 has at least one tooth 310.

The height of the protrusions 405, 410 of the aforementioned curved central area 400 is lower than or equal to the height of the teeth 210, 310.

As stated above, and as shown in figures 1 and 2 of the drawings, the curved central area 400 separating the first toothed area 200 and the second toothed area 300 is located at a substantially central part of the length L of the outer profile 110a, 110b, 110c of the sleeve 110. Moreover, as also shown in the aforementioned figures, the height of said central curved area 400 is lower than the height of the teeth 210, 310 of the first and second toothed area 200, 300. This configuration promotes an even contact pressure distribution at the mounting position, shown in figure 1, promoting material creeping in pressing.

With continued reference to figure 1, the fitting assembly 100 further comprises a bushing 120. The bushing 120 may be made, for example, of reduced thickness AISI 304 stainless steel deep drawing. The bushing 120 is intended to be mounted around the sleeve 110.

There is also provided a coupling part 130 intended for suitably holding the bushing 120 in the sleeve 110. The coupling part 130 of the bushing 120 is preferably made of plastic, such as PP. Other materials are possible.

As it can be seen from figure 1, the first end 114 of the outer profile 110a, 110b, 110c of the sleeve 110 is located closer to the coupling part 130 than the free end 115 of said outer profile 110a, 110b, 110c of the sleeve 110. In turn, the free end 115 of the outer profile 110a, 110b, 110c of the sleeve 110 is located furthest from the coupling part 130 than the first end 114 of said outer profile 110a, 110b, 110c of the sleeve 110.

The outer profile 110a, 110b, 110c of the sleeve 110, depending on its configuration according to figures 5 to 9, is configured for the positioning of the bushing 120 and the coupling of the coupling part 130 of said bushing 120. A gap suitable for the pipe 50 to be inserted through said sleeve 110a, 110b, 110c, is defined, in the mounting position, between the bushing 120 and the outer profile 110a, 110b, 110c of the sleeve 110. Thus, in operation or in an assembly position, as shown in figure 1, the pipe 50 is sandwiched between the bushing 120 and the sleeve 110. When radial pressure is applied to the bushing 120 through the use of the jaw 10, the bushing 120 is deformed and the pipe 50 is becomes trapped between the bushing 120 and the sleeve 110, with the pipe 50 being in close contact with the sleeve 110.

Figures 5 to 9 show several examples of the sleeve 110. In particular, in the example of figure 5, the sleeve 110 is formed by a single straight outer profile 110a. In the example of figure 6, the sleeve 110 is formed by two aligned straight outer profiles 110a, 110b. In the example of figure 7, the sleeve 110 is formed by a straight outer profile 110a and a threaded profile 140 aligned with said straight outer profile 110a. In the example of figure 8, the sleeve 110 is formed by two straight outer profiles 110a, 110b, arranged to form an angle of 90° there between defining an elbow configuration. Figure 9 is a perspective view of one example of a sleeve formed by three straight profiles 110a, 110b, 110c with two of them being arranged aligned and forming an angle of 90° with each other defining a T-shaped configuration.

As it can be seen from figures 1 and 2 of the drawings, in all the teeth 210, 310 in both toothed areas 200, 300, the ridge, i.e., the outer part intended to be in contact with the outer surface of the pipe 50 is rounded.

In the example described and illustrated in figures 1 and 2, the outer profile 110a, 110b, 110c of the sleeve 110 includes a support area 500 that is configured to receive the coupling part 130 for holding the bushing 120 and positioning the jaw 10 to properly press the bushing 120 onto the pipe 50 against the sleeve 110.

The inventors have found that, with a fitting assembly 100 as described above, with a defined design meeting the parameters that are given below, an efficient and watertight radial press joint of multilayer pipes 50 is possible to be carried out through a suitable jaw 10. When applying the jaw 10, a suitable radial contact pressure is generated between the pipe 50 and the sleeve 110 such that, in operation, no fluid leakage occurs, avoiding the use of sealing elements such as O-rings.

The above mentioned parameters defining the design of the present fitting assembly 100 are those cited below with reference to figures 2 and 2a and, in particular, to the enlarged view of figure 2b of the drawings showing the detail of the area S of figure 2a:
α ≠ 90° = 55-80°; 60-70°
β ≠ 90° = 45-80°; 60-70°
R₁ = 0.15-0.35 mm, preferably 0,3 mm
R₂ = 0.15-0.35 mm
L₁ ≥ L₂
d = 0.45-0.65 L
d₁ = 0.33-0.36 L₁
d₂ ≤ d₁
wherein:
α: angle between the flanks or side surfaces of the teeth 210, 310. The angle α preferably has a value other than 90°. Examples of values of said angle between the flanks of each tooth are between 55° and 80°, specifically between 60° and 70°;
β: angle defined between the flank of each tooth 210, 310 that is farthest from the free end 115 of the sleeve 110 and the outer surface 111 of the outer profile 110a, 110b, 110c of the sleeve 110. The angle β has a value other than 90°, i.e., a flank on each tooth is defined furthest from the free end 115 of the sleeve 110 having an inclination of a value β with respect to the outer surface 111 of the outer profile 110a, 110b, 110c of the sleeve 110. Examples of values of said angle β are between 45° and 80°, more specifically between 60° and 70°;
L: length of the outer profile 110a, 110b, 110c of the sleeve 110;
R₁: radius of curvature (0.15-0.35 mm) of the tooth ridges 210 of the first toothed area 200;
R₂: radius of curvature (0.15-0.35 mm) of the tooth ridges 310 of the second toothed area 300;
L₁: length of the first toothed area 200;
L₂: length of the second toothed area 300, shorter than or equal to the length of the first toothed area 200;
d: distance between a free end 115 of the sleeve 110 and the center of the central curved area 400, with a value preferably between 45-65% of the length L of the outer profile 110a, 110b, 110c of the sleeve 110;
d₁: distance between tooth ridges 210 of the first toothed area 200; and
d₂: distance between tooth ridges 310 of the second toothed area 300. Between contiguous tooth ridges 210 of the first toothed area 200, the distance d₁ may correspond to 33-36% of the length L₁ of the first toothed area 200. Between contiguous tooth ridges 310 of the second toothed area 300, the distance d₂ may be equal to or shorter than the distance d₁ between contiguous tooth ridges 210 of the first toothed area 200.

It has been found that the above described parameters applied to the fitting assembly 100, in combination with a sleeve 110 with two distinct tooth areas 200, 300 without sharp edges or flat portions on the tooth ridge 210, 310, separated by a curved central area 400 with protrusions 405, 410, allow the contact pressure distribution of the assembly 100 to be advantageously optimized, with values between 200 and 350 MPa, without the use of sealing elements to keep the pipe 50 attached to the fitting 100 once the radial pressing through the jaw 10 has been carried out, without fluid leakage.

The inventors carried out a temperature cycling test for the above described fitting assembly 100. The test consisted of cycling cold water, at 23 °C, and hot water, at 95 °C, alternately every 15 minutes. The total number of cycles was 5000, with each cycle lasting 30 min. The system pressure was maintained at 10 bar. This test characterized the long-term performance of the joints with the above described fitting assembly 100. The installation successfully passed the test without any leakage, thus validating the above described geometry, which was considered optimal for the design of the outer profile 110a, 110b, 110c of the sleeve 110 of the fitting assembly 100 described herein.

Although some particular examples of the present fitting assembly for pipe connection have been disclosed herein, it will be understood by those skilled in the art that other alternative variants as well as obvious modifications and equivalents thereof are possible within the scope of the claims. The present description includes all possible combinations of the particular examples described herein. Reference signs related to drawings and placed in parentheses in a claim are solely for attempting to increase the intelligibility of the claim and shall not be construed as limiting the scope of protection. The scope of the present disclosure should not be limited to specific embodiments but should be determined solely by a fair reading of the appended claims.

## Claims

1. Fitting assembly (100) for connecting pipes (50), the fitting assembly (100) comprising:
- a sleeve (110) having at least one outer profile (110a, 110b, 110c) with a length (L) extending from a first end (114) of the sleeve (110) to a free end (115) of the sleeve (110), opposite said first end (114), said outer profile (110a, 110b, 110c) including an outer surface (111) where at least a first toothed area (200) is formed having at least two teeth (210), at least a second toothed area (300) having at least one tooth (310), and a curved area (400) having a height lower than the height of the teeth (210, 310) of the first and second toothed areas (200, 300), the curved area (400) being formed between the first toothed area (200) and the second toothed area (300), at a substantially central position of said at least one outer profile (110a, 110b, 110c) of the sleeve (110);
- a bushing (120) intended to be mounted around the sleeve (110); and
- a coupling part (130) intended to hold the bushing (120) to the sleeve (110),
**characterized in that** the teeth (210, 310) of the first and second toothed areas (200, 300) have rounded ridges, wherein an angle (β) defined between a flank of each tooth (210, 310), said flank being located furthest from the free end (115) of the sleeve (110), and said outer surface (111) of the outer profile (110a, 110b, 110c) of the sleeve (110) has a value other than 90°, and wherein, in operation, the sleeve (110) and the bushing (120) are arranged with the pipe (50) sandwiched therebetween, the pipe (50) being in close contact with the sleeve (110) and the bushing (120), as the bushing (120) is pressed against the sleeve (110) through a jaw (10), and the tooth ridges (210) of the first toothed area (200) have a radius of curvature (R₁) of 0.3 mm.

2. Fitting assembly (100) as claimed in claim 1, wherein the tooth ridges (310) of the second toothed area (300) have a radius of curvature (R₂) of 0.2 mm.

3. Fitting assembly (100) as claimed in claim 1, wherein the angle (β) defined between the teeth (210, 310) and the outer profile (110a, 110b, 110c) of the sleeve (110) has a value between 45° and 80°.

4. Fitting assembly (100) as claimed in any of the preceding claims, wherein the angle (β) defined between the teeth (210, 310) and the outer profile (110a, 110b, 110c) of the sleeve (110) has a value between 60° and 70°.

5. Fitting assembly (100) as claimed in any of the preceding claims, wherein an angle (α) defined between the flanks of each tooth (210, 310) has a value other than 90°.

6. Fitting assembly (100) as claimed in claim 5, wherein said angle (α) defined between the flanks of each tooth (210, 310) has a value between 55° and 80°.

7. Fitting assembly (100) as claimed in claim 5 or 6, **characterized in that** said angle (α) defined between the flanks of each tooth (210, 310) has a value between 60° and 70°.

8. Fitting assembly (100) as claimed in any of the preceding claims, wherein a distance (d) from the free end (115) of the sleeve (110) to the center of the curved area (400) is between 45-65% of the length (L) of the outer profile (110a, 110b, 110c) of the sleeve (110).

9. Fitting assembly (100) as claimed in any of the preceding claims, wherein the first toothed area (200) extends along a first length (L1) and the second toothed area (300) extends along a second length (L2), the first length (L1) being longer than or equal to the second length (L2).

10. Fitting assembly (100) as claimed in claim 9, wherein a distance (d₁) between contiguous tooth ridges (210) of the first toothed area (200) is 33-36% of the first length (L1).

11. Fitting assembly (100) as claimed in claim 10, wherein a distance (d₂) between contiguous tooth ridges (310) of the second toothed area (300) is equal to the distance (d₁) between contiguous tooth ridges (210) of the first toothed area (200).

12. Fitting assembly (100) as claimed in claim 10, wherein a distance (d₂) between contiguous tooth ridges (310) of the second toothed area (300) is shorter than the distance (d₁) between contiguous tooth ridges (210) of the first toothed area (200).

13. Fitting assembly (100) as claimed in any of the preceding claims, wherein the outer profile (110a, 110b, 110c) of the sleeve (110) further comprises a support area (500) configured to receive the coupling part (130) for holding the bushing (120) and positioning the jaw (10).

14. Fitting assembly (100) as claimed in any of the preceding claims, wherein protrusions (405, 410) are formed at the ends of the curved area (400), a height of said protrusions (405, 410) being lower than or equal to the height of the teeth (210, 310).

## Patentansprüche

1. Montagebaugruppe (100) zum Verbinden von Rohren (50), wobei die Montagebaugruppe (100) Folgendes umfasst:
- eine Hülse (110) mit mindestens einem Außenprofil (110a, 110b, 110c) mit einer Länge (L), die sich von einem ersten Ende (114) der Hülse (110) zu einem freien Ende (115) der Hülse (110) gegenüber dem ersten Ende (114) erstreckt, wobei das Außenprofil (110a, 110b, 110c) eine Außenfläche (111), an der mindestens ein erster gezahnter Bereich (200) mit mindestens zwei Zähnen (210) gebildet ist, mindestens einen zweiten gezahnten Bereich (300) mit mindestens einem Zahn (310) und einen gekrümmten Bereich (400) mit einer Höhe, die niedriger als die Höhe der Zähne (210, 310) des ersten und des zweiten gezahnten Bereichs (200, 300) ist, umfasst, wobei der gekrümmte Bereich (400) zwischen dem ersten gezahnten Bereich (200) und dem zweiten gezahnten Bereich (300), an einer im Wesentlichen zentralen Position des mindestens einen Außenprofils (110a, 110b, 110c) der Hülse (110) gebildet ist;
- eine Buchse (120), die dazu bestimmt ist, um die Hülse (110) herum montiert zu werden; und
- ein Kupplungsteil (130), das dazu bestimmt ist, die Buchse (120) an der Hülse (110) zu halten,
**dadurch gekennzeichnet, dass** die Zähne (210, 310) des ersten und zweiten gezahnten Bereichs (200, 300) abgerundete Rippen haben, wobei ein Winkel (β) zwischen einer Flanke von jedem Zahn (210, 310) definiert, wobei die Flanke am weitesten von dem freien Ende (115) der Hülse (110) entfernt ist, und die Außenfläche (111) des Außenprofils (110a, 110b, 110c) der Hülse (110) einen anderen Wert als 90° hat, und wobei im Betrieb die Hülse (110) und die Buchse (120) derart angeordnet sind, dass das Rohr (50) dazwischen eingelegt ist, wobei das Rohr (50) in engem Kontakt mit der Hülse (110) und der Buchse (120) ist, wenn die Buchse (120) durch eine Backe (10) gegen die Hülse (110) gedrückt wird, und die Zahnrippen (210) des ersten gezahnten Bereichs (200) einen Krümmungsradius (R₁) von 0,3 mm haben.

2. Montagebaugruppe (100) wie in Anspruch 1 beansprucht, wobei die Zahnrippen (310) des zweiten gezahnten Bereichs (300) einen Krümmungsradius (R₂) von 0,2 mm haben.

3. Montagebaugruppe (100) wie in Anspruch 1 beansprucht, wobei der Winkel (β), der zwischen den Zähnen (210, 310) und dem Außenprofil (110a, 110b, 110c) der Hülse (110) definiert ist, einen Wert zwischen 45° und 80° hat.

4. Montagebaugruppe (100) wie in einem der vorhergehenden Ansprüche beansprucht, wobei der Winkel (β), der zwischen den Zähnen (210, 310) und dem Außenprofil (110a, 110b, 110c) der Hülse (110) definiert ist, einen Wert zwischen 60° und 70° hat.

5. Montagebaugruppe (100) wie in einem der vorhergehenden Ansprüche beansprucht, wobei ein Winkel (α), der zwischen den Flanken von jedem Zahn (210, 310) definiert ist, einen anderen Wert als 90° hat.

6. Montagebaugruppe (100) wie in Anspruch 5 beansprucht, wobei der Winkel (α), der zwischen den Flanken von jedem Zahn (210, 310) definiert ist, einen Wert zwischen 55° und 80° hat.

7. Montagebaugruppe (100) wie in Anspruch 5 oder 6 beansprucht, **dadurch gekennzeichnet, dass** der Winkel (α), der zwischen den Flanken von jedem Zahn (210, 310) definiert ist, einen Wert zwischen 60° und 70° hat.

8. Montagebaugruppe (100) wie in einem der vorhergehenden Ansprüche beansprucht, wobei ein Abstand (d) von dem freien Ende (115) der Hülse (110) zu der Mitte des gekrümmten Bereichs (400) zwischen 45-65% der Länge (L) des Außenprofils (110a, 110b, 110c) der Hülse (110) beträgt.

9. Montagebaugruppe (100) wie in einem der vorhergehenden Ansprüche beansprucht, wobei sich der erste gezahnte Bereich (200) entlang einer ersten Länge (L1) erstreckt und sich der zweite gezahnte Bereich (300) entlang einer zweiten Länge (L2) erstreckt, wobei die erste Länge (L1) länger als oder gleich der zweiten Länge (L2) ist.

10. Montagebaugruppe (100) wie in Anspruch 9 beansprucht, wobei ein Abstand (d₁) zwischen zusammenhängenden Zahnrippen (210) des ersten gezahnten Bereichs (200) 33-36% der ersten Länge (L1) beträgt.

11. Montagebaugruppe (100) wie in Anspruch 10 beansprucht, wobei ein Abstand (d₂) zwischen zusammenhängenden Zahnrippen (310) des zweiten gezahnten Bereichs (300) gleich dem Abstand (d₁) zwischen zusammenhängenden Zahnrippen (210) des ersten gezahnten Bereichs (200) ist.

12. Montagebaugruppe (100) wie in Anspruch 10 beansprucht, wobei ein Abstand (d₂) zwischen zusammenhängenden Zahnrippen (310) des zweiten gezahnten Bereichs (300) kürzer als der Abstand (d₁) zwischen zusammenhängenden Zahnrippen (210) des ersten gezahnten Bereichs (200) ist.

13. Montagebaugruppe (100) wie in einem der vorhergehenden Ansprüche beansprucht, wobei das Außenprofil (110a, 110b, 110c) der Hülse (110) ferner einen Stützbereich (500) umfasst, der konfiguriert ist, um das Kupplungsteil (130) zum Halten der Buchse (120) und Positionieren der Backe (10) aufzunehmen.

14. Montagebaugruppe (100) wie in einem der vorhergehenden Ansprüche beansprucht, wobei Vorsprünge (405, 410) an den Enden des gekrümmten Bereichs (400) ausgebildet sind, wobei eine Höhe der Vorsprünge (405, 410) geringer oder gleich der Höhe der Zähne (210, 310) ist.

## Revendications

1. Ensemble de montage (100) pour raccorder des tuyaux (50), l'ensemble de montage (100) comprenant :
- un manchon (110) ayant au moins un profil extérieur (110a, 110b, 110c) avec une longueur (L) s'étendant d'une première extrémité (114) du manchon (110) à une extrémité libre (115) du manchon (110), à l'opposé de ladite première extrémité (114), ledit profil extérieur (110a, 110b, 110c) comprenant une surface extérieure (111) où au moins une première zone dentée (200) est formée ayant au moins deux dents (210), au moins une seconde zone dentée (300) ayant au moins une dent (310), et une zone incurvée (400) ayant une hauteur inférieure à la hauteur des dents (210, 310) des première et seconde zones dentées (200, 300), la zone incurvée (400) étant formée entre la première zone dentée (200) et la seconde zone dentée (300), à une position essentiellement centrale dudit au moins un profil extérieur (110a, 110b, 110c) du manchon (110) ;
- une douille (120) destinée à être montée autour du manchon (110) ; et
- une partie d'accouplement (130) destinée à maintenir la douille (120) sur le manchon (110),
**caractérisé en ce que** les dents (210, 310) des première et seconde zones dentées (200, 300) ont des crêtes arrondies, dans lequel un angle (β) défini entre un flanc de chaque dent (210, 310), ledit flanc étant situé le plus loin de l'extrémité libre (115) du manchon (110), et ladite surface extérieure (111) du profil extérieur (110a, 110b, 110c) du manchon (110) a une valeur autre que 90°, et dans lequel, en fonctionnement, le manchon (110) et la douille (120) sont agencés avec le tuyau (50) pris en sandwich entre eux, le tuyau (50) étant en contact étroit avec le manchon (110) et la douille (120), lorsque la douille (120) est pressée contre le manchon (110) par le biais d'une mâchoire (10), et les crêtes de dents (210) de la première zone dentée (200) ont un rayon de courbure (R₁) de 0,3 mm.

2. Ensemble de montage (100) tel que revendiqué dans la revendication 1, dans lequel les crêtes de dents (310) de la seconde zone dentée (300) ont un rayon de courbure (R₂) de 0,2 mm.

3. Ensemble de montage (100) tel que revendiqué dans la revendication 1, dans lequel l'angle (β) défini entre les dents (210, 310) et le profil extérieur (110a, 110b, 110c) du manchon (110) a une valeur comprise entre 45° et 80°.

4. Ensemble de montage (100) tel que revendiqué dans l'une quelconque des revendications précédentes, dans lequel l'angle (β) défini entre les dents (210, 310) et le profil extérieur (110a, 110b, 110c) du manchon (110) a une valeur comprise entre 60° et 70°.

5. Ensemble de montage (100) tel que revendiqué dans l'une quelconque des revendications précédentes, dans lequel un angle (α) défini entre les flancs de chaque dent (210, 310) a une valeur autre que 90°.

6. Ensemble de montage (100) tel que revendiqué dans la revendication 5, dans lequel ledit angle (α) défini entre les flancs de chaque dent (210, 310) a une valeur comprise entre 55° et 80°.

7. Ensemble de montage (100) tel que revendiqué dans la revendication 5 ou 6, **caractérisé en ce que** ledit angle (α) défini entre les flancs de chaque dent (210, 310) a une valeur comprise entre 60° et 70°.

8. Ensemble de montage (100) tel que revendiqué dans l'une quelconque des revendications précédentes, dans lequel une distance (d) de l'extrémité libre (115) du manchon (110) au centre de la zone incurvée (400) est comprise entre 45-65 % de la longueur (L) du profil extérieur (110a, 110b, 110c) du manchon (110).

9. Ensemble de montage (100) tel que revendiqué dans l'une quelconque des revendications précédentes, dans lequel la première zone dentée (200) s'étend le long d'une première longueur (L1) et la seconde zone dentée (300) s'étend le long d'une seconde longueur (L2), la première longueur (L1) étant plus longue que ou égale à la seconde longueur (L2).

10. Ensemble de montage (100) tel que revendiqué dans la revendication 9, dans lequel une distance (d₁) entre des crêtes de dents contiguës (210) de la première zone dentée (200) est de 33-36 % de la première longueur (L1).

11. Ensemble de montage (100) tel que revendiqué dans la revendication 10, dans lequel une distance (d₂) entre des crêtes de dents contiguës (310) de la seconde zone dentée (300) est égale à la distance (d₁) entre des crêtes de dents contiguës (210) de la première zone dentée (200).

12. Ensemble de montage (100) tel que revendiqué dans la revendication 10, dans lequel une distance (d₂) entre des crêtes de dents contiguës (310) de la seconde zone dentée (300) est plus courte que la distance (d₁) entre des crêtes de dents contiguës (210) de la première zone dentée (200).

13. Ensemble de montage (100) tel que revendiqué dans l'une quelconque des revendications précédentes, dans lequel le profil extérieur (110a, 110b, 110c) du manchon (110) comprend en outre une zone de support (500) configurée pour recevoir la partie de couplage (130) pour maintenir la douille (120) et positionner la mâchoire (10).

14. Ensemble de montage (100) tel que revendiqué dans l'une quelconque des revendications précédentes, dans lequel des saillies (405, 410) sont formées aux extrémités de la zone incurvée (400), une hauteur desdites saillies (405, 410) étant inférieure ou égale à la hauteur des dents (210, 310).
